## Europäisches Patentamt
## European Patent Office
## Office européen des brevets

(19)

(11) Numéro de publication: **0 001 117**
**B1**

(12) **FASCICULE DE BREVET EUROPEEN**

(21) Numéro de dépôt: **78100837.0**

(22) Date de dépôt: **07.09.78**

(51) Int. Cl.³: **G 02 B 5/14,** G 02 B 7/00

(54) Dispositif mécanique de raccordement de fibres optiques

(30) Priorité: **14.09.77 FR 7727726**

(43) Date de publication de la demande:
**21.03.79 Bulletin 79/06**

(45) Mention de la délivrance du brevet:
**03.09.80 Bulletin 80/18**

(84) Etats contractants désignés:
**CH DE FR GB NL SE**

(56) Documents cités:
**DE - A - 2 602 661**
**FR - A - 2 275 787**
**FR - A - 2 275 788**
**FR - A - 2 282 650**
**FR - A - 2 316 611**
**GB - A - 1 454 600**
**US - A - 4 019 241**
**US - A - 4 030 809**

**FR - A - 2 282 650**

(73) Titulaire: **Société Anonyme dite:**
**Les Cables De Lyon**
**170, avenue Jean Jaurès**
**F - 69353 Lyon Cedex 2 (FR)**

(72) Inventeur: **Mignien, Georges**
**30, rue Voltaire**
**F - 69330 Meyzieu (FR)**
**Millet, Christian**
**1, rue de Dunkerque**
**F - 69330 Meyzieu (FR)**

(74) Mandataire: **Weinmiller, Jürgen**
**Zeppelinstrasse 63**
**D - 8000 München 80 (DE)**

Courier Press, Leamington Spa, England.

Dispositif mécanique de raccordement de fibres optiques

La présente invention concerne un dispositif mécanique de raccordement de fibres optiques entre elles selon le préambule de la revendication 1 permettant d'effectuer des liaisons à faibles atténuations.

Les fibres optiques doivent être connectées ou liées avec précision; ces liaisons peuvent être permanentes, généralement appelées épissures, ou démontables, généralement appelées connexions.

Il existe plusieurs procédés de connexion mécanique pour relier les fibres, mais ceux-ci sont généralement encombrants, compliqués et nécessitent des usinages de grande précision pour maintenir les extrémités des fibres vis-à-vis, dans les tolérances acceptables.

Il est connu d'assurer l'alignement de deux fibres optiques en regard au moyen d'un canal défini par trois cylindres métalliques pleins, tangents entre eux, deux à deux. L'une des méthodes déjà connues consiste à réaliser pour chaque jonction deux embouts constitués chacun de trois tiges cylindriques tangentes deux à deux laissant un canal à l'intérieur pour le passage de la fibre optique, chacun des groupes de trois tiges étant disposé à l'intérieur d'une rainure en vé des moyens d'immobilisation des trois tiges étant obtenus par appui transversal (demande de brevet allemand no 2 722 601 de la Demanderesse). Ces moyens d'immobilisation sont obtenus grâce à des patins de serrage ou une couronne cylindrique d'élastomère. Cependant cette méthode ne donne pas entièrement satisfaction quant aux pertes d'atténuation de fibre à fibre, et nécessite un réglage séparé de la pression sur chaque embout.

L'invention telle qu'elle est caractérisée dans les revendications a pour but d'assurer sans réglage délicat une pression égale sur les deux embouts, et par suite d'éliminer les pertes d'atténuation dues à une pression excessive sur l'un au moins des embouts, ainsi que de permettre une mise en place très simple et rapide, particulièrement pour un collecteur a fibre optique unique.

En se référant aux figures schématiques 1 à 4 cijointes, on va décrire ci-après un exemple de mise en oeuvre de la présente invention, exemple donné à titre purement illustratif et nullement limitatif.

La figure 1 représente une coupe longitudinale d'un dispositif conformément à la présente invention premettant de connecter une seule fibre.

La figure 2 représente une coupe transversale selon II—II de la figure 1 du même dispositif.

La figure 3 représente une coupe transversale d'un dispositif conformément al'invention permettant de connecter à la fois plusieurs fibres.

La figure 4 représente une variante de lame élastique pour le dispositif selon l'une des figures 1 ou 3.

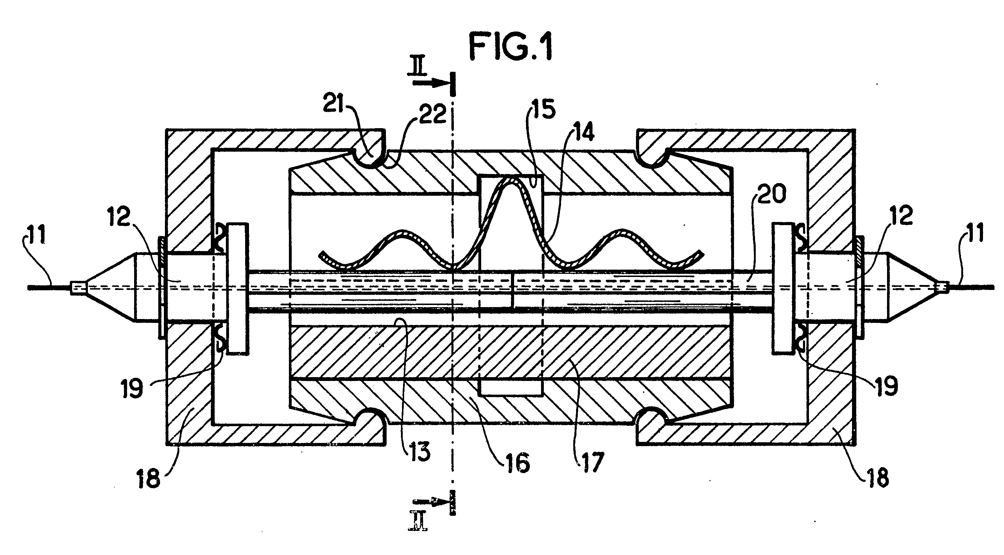

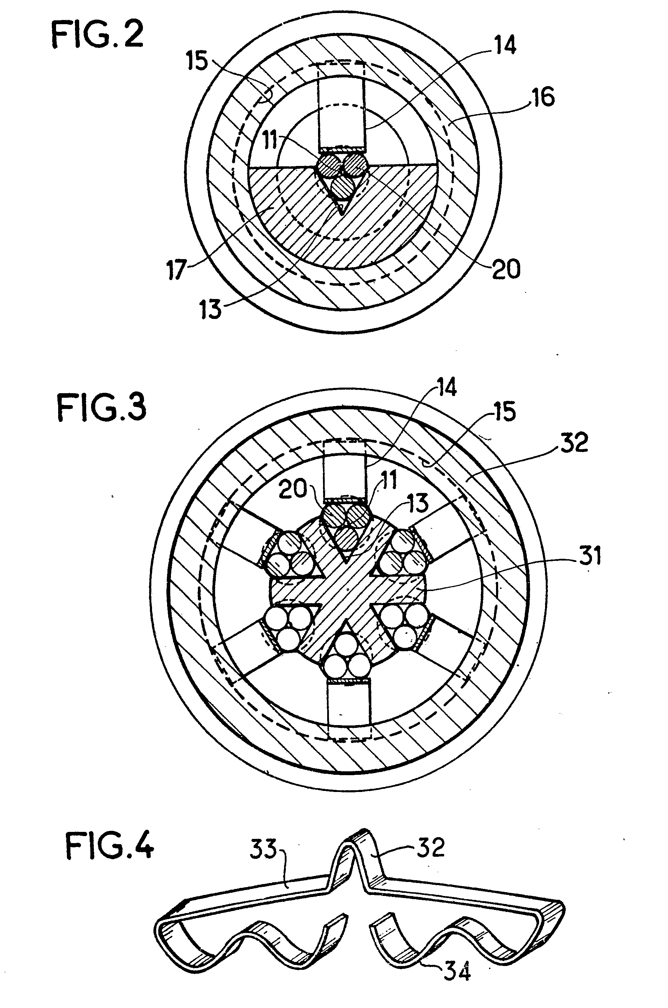

Comme on le voit sur les figures 1 et 2, les fibres optiques 11 gainées d'un matériau thermoplastique sont munies d'embouts 12; lesdits embouts solidaires de trois tiges cylindriques métalliques 20 tangentes entre elles deux à deux sont glissés au montage dans une rainure en vé 13 à 60° d'angle. Une lame 14 métallique élastique, par exemple en acier, immobilisée en translation par une gorge intérieure circulaire 15, réalise l'appui de l'embout dans la rainure 13, soit directement, soit par l'intermédiaire d'une lame plate en matière plastique, telle que le polyméthacrylate de méthyle (non représentée).

Un avantage de la lame déformable est qu'elle permet l'appui en un ou plusieurs points de l'embout améliorant ainsi le guidage. D'autre part, il est possible de glisser l'embout directement sous la lame 14.

Le connecteur monojonction est essentiellement constitué d'un corps 16 en forme de couronne dans lequel on vient insérer la lame déformable 14 et une pièce usinée en demi-cylindre 17 supportant la rainure en vé 13. Des capuchons 18 encliquetables grâce à des bourrelets internes 21 s'engageant dans des gorges 22 du corps 16, et contenant les embouts 12, sont rapportés à chaque extrémité, les embouts étant montés libres dans le capuchon. Après montage, des rondelles élastiques 19 mettent en pression les extrémités des embouts 12 contre les capuchons 18 repoussant les extrémités des tiges 20 les unes contre les autres; ainsi, après ouverture et fermeture du connecteur, on réalise la reproductibilité des efforts de maintien des embouts. De plus, au moment de l'encliquetage, les trois éléments intérieurs se mettent en place par équilibre des forces. La fixation des capuchons 18 sur le corps 16 pourrait aussi être assurée par des filetages ou par un système à baïonnette, bien que la fixation représentée paraisse préferable.

La figure 3 représente la coupe transversale d'un dispositif multijonction dans lequel un noyau central 31 supportant les rainures en vé 13 est positionné par les lames déformables 14 au centre d'une couronne 32 munie d'une gorge telle que 15. Le connecteur représenté peut raccorder six fibres à titre d'exemple.

La figure 4 représente en perspective une autre forme de réalisation de la lame déformable permettant également l'appui en plusieurs points de l'embout 12 dans sa partie inférieure. L'ondulation centrale 32, destinée à venir prendre appui dans le fond de la gorge 15 du corps 16, se prolonge par des bras latéraux 33 et des parties ondulées 34 repliées en vis-à-vis des bras latéraux, destinées à appuyer élastiquement sur les tiges.

## Revendications

1. Dispositif mécanique de raccordement de fibres optiques entre elles comportant pour chaque jonction deux embouts constitués chacun de trois tiges cylindriques (20) tangentes deux à deux, laissant un canal à l'intérieur pour le passage de la fibre optique (11), chacun des groupes de trois tiges étant disposé à l'intérieur d'une rainure en vé (13) dont le support est associé à une couronne circulaire (16) formant corps, chacun des embouts étant associé à un capuchon d'extrémité (18), les groupes de trois tiges étant immobilisés par des moyens d'immobilisation par appui transversal sur deux des trois tiges, caractérisé en ce que lesdits moyens d'immobilisation comprennent une lame élastiquement déformable (14) disposée entre ladite couronne circulaire (16) et lesdits groupes de tiges (20), et en ce qu'il comprend en outre des moyens d'immobilisation longitudinale dudit corps par rapport audit capuchon (21, 22), et des moyens de rappel élastique des extrémités des tiges les unes contre les autres (19) disposés entre ledit embout et ledit capuchon.

2. Dispositif selon la revendication 1, caractérisé en ce que les moyens de rappel élastique sont constitués par une rondelle élastique (19) disposée entre un épaulement dudit embout et le fond dudit capuchon (18).

3. Dispositif selon les revendications 1 ou 2, caractérisé en ce que ladite lame élastiquement déformable (14) comprend plusieurs points d'appui sur lesdites tiges cylindriques.

4. Dispositif selon les revendications 1, 2 ou 3, caractérisé en ce que ladite couronne (16) comporte une gorge circulaire interne (15) permettant d'arrêter en translation ladite lame élastiquement déformable (14).

5. Dispositif selon la revendication 4, caractérisé en ce que ladite lame élastiquement déformable (14) comporte une ondulation centrale prenant appui dans le fond de la gorge circulaire interne (15) et des ondulations latérales prenant appui sur les tiges (Figure 1).

6. Dispositif selon la revendication 4, caractérisé en ce que ladite lame élastiquement déformable (14) comporte une ondulation centrale (32) prenant appui dans le fond de la gorge circulaire interne (15), des bras latéraux (33) et des parties ondulées (34 repliées en vis-à-vis des bras latéraux, et prenant appui sur les tiges (Figure 4).

## Patentansprüche

1. Mechanische Vorrichtung zur Verbindung von Lichtleitfasern untereinander, die für jeden Verbindungspunkt zwei Ansatzstücke aufweist, die je aus drei sich paarweise berührenden zylindrischen Stangen (20) bestehen, welche im Inneren einen Kanal zum Durchlaß der Lichtleitfaser (11) freilassen, wobei jede der Gruppen von drei Stangen im Inneren einer V-förmigen Nut (13) angebracht ist, deren Halterung mit einem kreisförmigen geschlossenen Kranz (16) verbunden ist, wobei jedes der Ansatzstücke mit einer Endverschlußkappe (18) verbunden ist und die Gruppen von drei Stangen mithilfe von Haltemitteln durch Querdruck auf zwei der drei Stangen fixiert wird, dadurch gekennzeichnet, daß die Haltemittel eine Blattfeder (14) zwischen dem kreisförmigen Kranz (16) und den Gruppen von Stangen aufweisen, und daß die Vorrichtung außerdem Haltemittel (21, 22) zur Längsfixierung des Kranzes in bezug auf die Verschlußkappe und elastische Druckmittel (19) zwischen den Ansatzstücken und den Endkappen aufweisen, um die Stangen gegeneinander zu drücken.

2. Vorrichtung nach Anspruch 1, dadurch gekennzeichnet, daß die elastischen Druckmittel aus einer elastischen Lochscheibe (19) bestehen, die zwischen einer Schulter des Ansatzstücks und dem Boden der Verschlußkappe (18) angeordnet ist.

3. Vorrichtung nach einem der Ansprüche 1 oder 2, dadurch gekennzeichnet, daß die Blattfeder (14) an verschiedenen Stellen auf die zylindrischen Stangen drückt.

4. Vorrichtung nach den Ansprüchen 1, 2 oder 3, dadurch gekennzeichnet, daß der Kranz (16) eine innere Ringnut (15) aufweist, mit der die Blattfeder (14) in Längsrichtung festgehalten werden kann.

5. Vorrichtung nach Anspruch 4, dadurch gekennzeichnet, daß die Blattfeder (14) einen zentralen Bogen aufweist, der sich am Boden der inneren Ringnut (15) abstützt und seitliche Bögen, die auf die Stangen drücken (Fig. 1).

6. Vorrichtung nach Anspruch 4, dadurch gekennzeichnet daß die Blattfeder (14) einen zentralen Bogen (32), der gegen den Boden der inneren Ringnut (15) drückt, Seitenarme (33) und gewellte Teile (34) aufweist, die durch Umfalten gegenüber den Seitenarmen liegen und auf die Stangen drücken (Fig. 4).

## Claims

1. A mechanical device for connecting optical fibres together, said device including, for each junction, two clamping pieces each constituted by three cylindrical rods (20) which are tangential to each other in pairs and which leave a channel between them for the optical fibre (11) to pass through, each of the groups of three rods being disposed inside a V-shaped groove (13) whose support is associated with a circular crown (16), each of the end pieces being associated with an end cover (18), the groups of three rods being prevented from moving by means which bear transversally on two of the three rods, characterized by the fact that said means for preventing movement include an elastically deformable blade (14) disposed between said circular crown (16) and said groups of rods (20), and that the device further includes means for preventing said crown from moving longitudinally in relation to said cover (21, 22) and means for elastically pushing the ends of the rods against one another, said means being disposed between said clamping piece and said cover.

2. A device according to claim 1, characterized by the fact that the elastic return means are constituted by a spring washer (19) disposed between a shoulder of said clamping piece and the end of said cover (18).

3. A device according to claim 1 or claim 2, characterized by the fact that said elastically deformable blade (14) bears on said cylindrical rods at several points.

4. A device according to claims 1, 2 or 3, characterized by the fact that said crown (16) has a circular inside groove (15) which prevents said elastically deformable blade (14) from moving in translation.

5. A device according to claim 4, characterized by the fact, that said elastically deformable blade (14) has a central ondulation which bears in the bottom of the circular inside groove (15) and lateral ondulations which bear against the rods (Fig. 1).

6. A device according to claim 4, characterized by the fact that said elastically deformable blade (14) has a central ondulation (32) which bears in the bottom of the circular inside groove (15), lateral arms (33) and ondulations (34) bended back face to the lateral arms and bearings on the rods (Fig. 4).

FIG.1

0 0 0 1 1 1 7

**FIG.2**

**FIG.3**

**FIG.4**